Europäisches Patentamt

European Patent Office

Office européen des brevets

(19)

(11) Numéro de publication : **0 295 978 B1**

(12) **FASCICULE DE BREVET EUROPEEN**

(45) Date de publication du fascicule du brevet :
14.08.91 Bulletin 91/33

(51) Int. Cl.⁵ : **B64G 1/24, G05D 1/08**

(21) Numéro de dépôt : **88401233.7**

(22) Date de dépôt : **20.05.88**

(54) **Dispositif et procédé de pointage d'une sonde spatiale vers un corps céleste.**

(30) Priorité : 22.05.87 FR 8707221

(43) Date de publication de la demande :
21.12.88 Bulletin 88/51

(45) Mention de la délivrance du brevet :
14.08.91 Bulletin 91/33

(84) Etats contractants désignés :
AT BE CH DE ES GB GR IT LI LU NL SE

(56) Documents cités :
EP-A- 0 101 333
FR-A- 2 177 364
FR-A- 2 531 547

(73) Titulaire : **CENTRE NATIONAL D'ETUDES SPATIALES**
**2 Place Maurice-Quentin**
**F-75039 Paris Cedex 01 (FR)**

(72) Inventeur : **Moura, Denis**
**13, rue Deville**
**F-31000 Toulouse (FR)**
Inventeur : **Torres, Louis**
**Chemin de Canteloup§Labege**
**F-31320 Castanet Tolosan (FR)**

(74) Mandataire : **Mongrédien, André et al**
**c/o BREVATOME 25, rue de Ponthieu**
**F-75008 Paris (FR)**

## Description

La présente invention concerne un dispositif et un procédé de pointage d'une sonde spatiale vers un corps céleste.

Les sondes spatiales d'observation du système solaire parcourent des orbites appartenant sensiblement au plan de l'écliptique où se trouvent les différentes planètes. Il est important de pointer une face déterminée de ces sondes vers un corps céleste qui peut être notamment le Soleil ou la Terre si cette face porte des piles solaires ou une antenne fixe. Les sondes stabilisées trois axes, c'est-à-dire non soumises à une révolution sur elles-mêmes, subissent une dérive d'orientation par suite des déplacements de la sonde et du corps céleste sur leurs orbites que l'on entreprend de corriger par une rotation autour de l'axe perpendiculaire au plan de leur orbite.

On a utilisé jusqu'à présent uniquement des dispositifs moteurs tels que des tuyères qui fonctionnent de manière discontinue et effectuent des corrections d'orientation ponctuelles. Des capteurs de position du corps céleste concerné indiquent quand le pointage est de nouveau parfait. De tels dispositifs présentent l'inconvénient de devoir être utilisés relativement fréquemment et de nécessiter une consommation d'énergie non négligeable.

L'invention concerne un perfectionnement de tels dispositifs de pointage : elle utilise les vents solaires pour engendrer une variation d'orientation continue entre deux opérations de correction en liaison avec une roue cinétique embarquée. Ce perfectionnement permet à la fois des corrections beaucoup moins importantes et moins fréquentes.

Plus spécialement, l'invention concerne un dispositif de pointage d'une sonde spatiale vers un corps céleste par rotation de la sonde autour d'un premier axe qui comprend un capteur de position du corps céleste et un premier système moteur reliés à un premier système de commande, caractérisé en ce qu'il comprend en outre : une roue cinétique tournant autour d'un deuxième axe orthogonal au premier axe ; une voilure solaire recevant du Soleil une pression solaire qui engendre sur la sonde une action résultante qui inclut un couple autour d'un troisième axe, orthogonal au premier et au deuxième axes ; ainsi qu'un variateur de vitesse de la roue cinétique et un second système moteur, imprimant à la sonde une rotation autour du deuxième axe, tous deux reliés à un second système de commande qui connaît la valeur de la pression solaire et la vitesse de rotation à imprimer à la sonde autour du premier axe.

La voilure solaire est de forme particulière. On peut distinguer deux types principaux : celui où la voilure solaire présente une dissymétrie par rapport au troisième axe, et celui où la voilure solaire est orientée obliquement par rapport au Soleil.

L'invention concerne en outre un procédé d'utilisation du dispositif de pointage selon l'invention, caractérisé en ce qu'il consiste, la sonde étant préalablement pointée vers le corps céleste, à successivement :

— évaluer la vitesse de rotation à imprimer à la sonde pour maintenir le pointage ;

— agir sur la vitesse de rotation de la roue cinétique par le variateur de vitesse tout en évitant une rotation de la sonde autour du deuxième axe en actionnant le second système moteur ;

— interrompre toute action de correction pendant un temps déterminé ; et

— corriger périodiquement, comme connu en soi, le pointage de la sonde en actionnant le premier système moteur.

L'invention va maintenant être décrite à l'aide des figures annexées dont l'énumération suit, et qui sont données à titre illustratif et nullement limitatif :

— la figure 1 est une vue générale de l'orbite d'une sonde spatiale dans le système solaire et permet d'expliciter le problème posé ;

— la figure 2 donne une représentation d'un mode de réalisation possible de l'invention ;

— la figure 3 donne une représentation d'un mode équivalent de réalisation de l'invention ;

— les figures 4 et 5 représentent des modifications que l'on peut apporter respectivement aux figures 2 et 3.

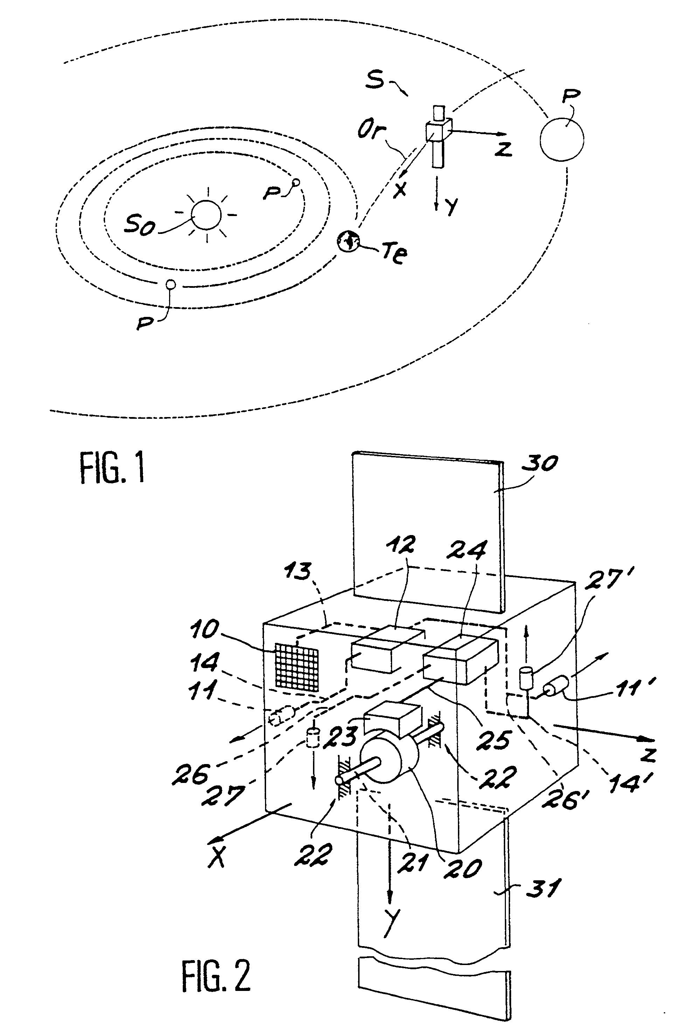

La figure 1 représente tout d'abord le système solaire : le Soleil So, diverses planètes P et la Terre Te. La Terre Te et les autres planètes P tournent, comme il est bien connu, autour du Soleil So suivant des orbites appartenant sensiblement au plan de l'écliptique.

Une sonde S est lancée de la Terre Te suivant une orbite Or. Elle est destinée à passer à proximité d'une ou plusieurs planètes P et son orbite Or appartient également à peu près au plan de l'écliptique.

On désire donc orienter toujours la même face de la sonde S vers un certain corps céleste. Ce corps céleste peut être, comme c'est le cas sur la figure 1, la Terre Te pour maintenir les communications radio dans le cas où la sonde S est pourvue d'une antenne fixe. Il peut également être de façon plausible le soleil So pour assurer une bonne exposition des photopiles.

On définit un trièdre d'axes X, Y, Z liés à la sonde S : les axes X et Z appartiennent au plan de l'orbite Or et l'axe Y lui est donc perpendiculaire. Le problème se résume à pointer l'axe X vers le corps céleste considéré en imprimant à la sonde S une rotation autour de l'axe Y. On y parvient au moyen du dispositif décrit d'après la figure 2.

Les dispositifs déjà connus comprennent tout d'abord un capteur de position du corps céleste vers lequel il faut orienter la sonde S. Ce capteur est référencé par 10 et peut consister en une mosaïque de cellules photovoltaïques ayant un champ de vision spatial de quelques degrés de largeur dont les informations permettent de reconstituer l'image du corps céleste. Il comprend encore deux tuyères 11 et 11' exerçant sur la sonde S des poussées de direction suivant l'axe X et de sens opposés. Ces tuyères sont établies sur deux faces opposées de la sonde S de façon à engendrer un couple de rotation autour de l'axe Y. Le dispositif comprend enfin un premier système de commande 12. L'ensemble fonctionne de manière discontinue : le premier système de commande 12 suit la dérive de l'orientation de la sonde S à l'aide du capteur 10 auquel il est relié par une ligne 13. Quand cette dérive atteint une valeur limite ou bien avant d'atteindre cette limite et à intervalles de temps déterminés sous l'impulsion d'un système de mesure du temps qui lui est incorporé, le premier système de commande 12 met en action les tuyères 11 et 11' à l'aide de lignes respectives 14 et 14', et jusqu'à ce que l'orientation de la sonde S soit parfaitement corrigée.

La dérive de l'orientation de la sonde S est produite avant tout par le déplacement relatif de la sonde S et du corps céleste associé. Ce déplacement relatif est donc parfaitement prévisible car la position de la sonde S et celle du corps céleste sur lequel il faut réaliser l'orientation sont toujours disponibles sous forme de tables ou d'éphémérides. Le but de l'invention est de fournir un système qui anticipe la dérive de l'orientation et la corrige à tout instant, et qui n'utilise le système déjà décrit que pour des corrections complémentaires beaucoup moins importantes que celles pour lesquelles il était employé jusqu'à présent.

D'après le mode particulier de réalisation de l'invention décrit figure 2, on dispose une roue cinétique, tournant à grande vitesse autour de l'axe X, à l'intérieur de la sonde S. Cette roue cinétique porte la référence 20 et est reliée par l'intermédiaire d'un arbre de rotation 21 à des tourillons 22 fixés la sonde S. La vitesse de rotation de la roue 20 peut être modifiée à l'aide d'un variateur de vitesse 23 constitué d'un stator établi à proximité de celle-ci et qui exerce des forces électromagnétiques sur la roue 20 qui peuvent indifféremment l'accélérer ou la freiner. Le variateur de vitesse 23 est commandé par un second système de commande 24 par l'intermédiaire d'une ligne 25. Le second système de commande 24 est relié par des lignes 26 et 26' à des tuyères 27 et 27' qu'il met également en action. Les tuyères 27 et 27' exercent des poussées suivant l'axe Y et de sens opposés ; elles sont établies sur deux faces opposées de la sonde si bien que leur résultante est un couple de rotation autour de l'axe X.

Le dispositif de pointage comprend encore deux voiles solaires 30 et 31 fixées sur deux faces opposées de la sonde S et qui s'étendent essentiellement, à partir de celle-ci, dans la direction définie par l'axe Y. Les voiles solaires 30 et 31 sont dissymétriques, l'une d'entre elles, ici 31, possédant une surface plus importante. La pression solaire qui s'exerce sur les voiles solaires 30 et 31 a par conséquent une action résultante qui comprend un couple de basculement de la sonde S autour de l'axe Z.

La présence conjointe d'une voilure solaire dissymétrique par rapport à un axe Z et d'une roue cinétique 20 tournant autour d'un autre axe X produit une rotation de l'ensemble de la sonde S autour d'un axe orthogonal aux deux précédents, à savoir l'axe Y. Ce mouvement de précession a une vitesse proportionnelle à la pression de radiation solaire s'exerçant sur les voilures 30 et 31, à l'importance de la dissymétrie entre les deux voiles 30 et 31 (différence de surface et position de cette différence), et inversement proportionnelle au moment cinétique de la roue 20, c'est-à-dire à sa vitesse de rotation. Dans la réalisation décrite ici, le second système de commande 24 calcule à intervalles déterminés la vitesse de rotation autour de l'axe Y qu'il faut réaliser pour maintenir un pointage satisfaisant vers le corps céleste. Il connaît la position de la sonde S par rapport au soleil So et peut donc déterminer la valeur de la pression solaire Ps en cet instant et en cet endroit par la formule $Ps = Po/D^2$, où Po est égal à $4,73.10^{-6}$ newton par $m^2$, et où D désigne la distance entre la sonde S et le soleil So en unités astronomiques (150 millions de kilomètres). Le second système de commande 24 calcule finalement la vitesse de rotation de la roue cinétique 20 permettant de réaliser la vitesse de rotation de précession autour de l'axe Y souhaitée et agit donc sur le variateur de vitesse 23 pour modifier la vitesse de rotation de la roue cinétique 20. Cette dernière action se traduit toutefois par une rotation d'ensemble de la sonde S autour de l'axe X qui est corrigée par une éjection de gaz des tuyères 27 et 27'.

La rotation de précession autour de l'axe Y se poursuit ensuite sans action du système de commande 24.

Les deux systèmes de commande 12 et 24 peuvent rester indépendants l'un de l'autre. Le premier système de commande 12 n'est plus utilisé que comme un système complémentaire permettant de parfaire l'orientation que l'on utilise à intervalles déterminés, par exemple juste avant que le second système de commande 24 reprenne ses calculs et ses actions de correction.

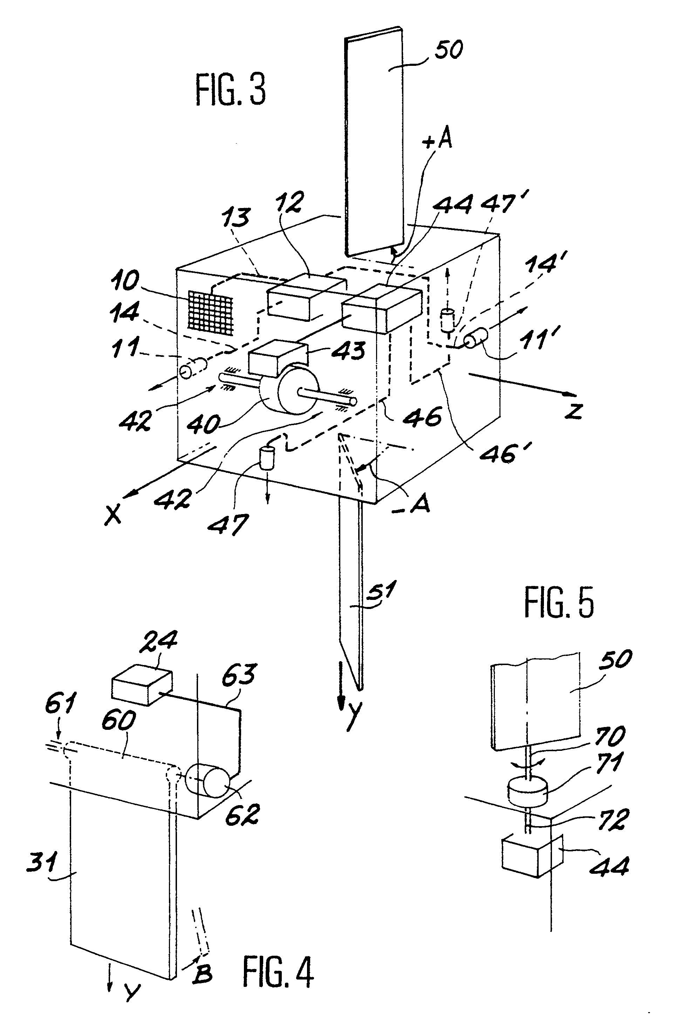

Une autre réalisation équivalente de l'invention est décrite à l'aide de la figure 3.

Cette réalisation présente de nombreuses ressemblances avec la précédente : on retrouve le capteur 10, le premier système de commande 12 et le système de tuyères 11 et 11' ; on retrouve également une roue cinétique 40 sur un axe 41 tournant dans deux tourillons 42 fixés à la sonde S, commandée par un variateur de vitesse 43 relié à un second dispositif de commande 44 par une ligne 45. La différence entre la roue 20 et la roue 40 est que celle-ci est en rotation autour de l'axe Z. Le second système de pilotage 44 commande au moyen de lignes 46 et 46' deux tuyères 47 et 47' établies sur des faces opposées de la sonde S et exerçant sur celle-ci des poussée suivant l'axe Y et de sens opposés de façon à produire un couple de rotation de la sonde S autour de l'axe Z.

Dans ce mode-ci de réalisation de l'invention, la sonde S comprend deux voiles solaires 50 et 51 s'étendant dans la direction Y à partir de deux faces opposées de la sonde S sur lesquelles elles sont fixées. La forme de ces voiles 50 et 51 est ici semblable, mais leur orientation angulaire est différente : elles font des angles de valeurs absolues égales et de signes opposés avec le plan défini par les axes Y et Z. Ces angles sont référencés respectivement + A et − A pour les deux voiles solaires 50 et 51. La pression solaire qui s'exerce sur les voiles solaires 50 et 51 a donc une action résultante qui inclut un couple de rotation autour de l'axe X.

Cette voilure solaire 50 et 51 et la roue cinétique 40 produisent donc, pour la même raison que dans l'autre mode de réalisation déjà décrit, un mouvement de précession autour d'un axe perpendiculaire à l'axe de dissymétrie de la voilure solaire, ici X, et à l'axe de rotation de la roue cinétique 40, ici Z, c'est-à-dire autour de l'axe Y. Comme dans la réalisation précédente, on crée la vitesse de mouvement de précession souhaitée en agissant sur la vitesse de rotation de la roue cinétique 40, et il est de même nécessaire de corriger l'inclinaison que la sonde prend alors autour de l'axe Z à l'aide des tuyères 47 et 47'.

Plusieurs modifications peuvent être apportées aux réalisations qui ont été décrites jusqu'ici. Tout d'abord, les systèmes de commande 24 et 44, de même d'ailleurs que le premier système de commande 12, peuvent être en partie situés sur Terre : les calculs et les décisions se font hors de la sonde S et il est alors simplement nécessaire de les acheminer à l'aide d'un système de télécommunication.

Il est encore possible d'utiliser l'invention avec des voiles à géométrie variable. C'est ce que montrent les figures 4 et 5.

Sur la figure 4, une des voiles solaires 31 de la première réalisation n'est plus fixée à la sonde mais peut pivoter par rapport à celle-ci. Son extrémité est alors traversée par une tige 60 dont une extrémité est insérée dans un palier 61 fixé à la sonde S et dont l'autre extrémité est mise en rotation à l'aide d'un moteur 62 fixé également sur la sonde S et commandé par le second système de commande 24 à l'aide d'une ligne 63. Cette disposition permet de rabattre la voile solaire 31 plus ou moins sur la sonde S en modifiant l'angle B qu'elle fait avec l'axe Y. Il est donc possible de modifier la dissymétrie de la voilure solaire et le couple autour de l'axe Z.

Comme le montre la figure 5, une dissymétrie variable peut également être appliquée aux voiles solaires 50 et 51 de la seconde réalisation. Elles peuvent être alors montées pivotantes au sommet d'un petit mât 70 mis en rotation par un moteur 71 commandé par le second système de commande 44 au moyen d'une ligne 72 : on peut ainsi faire varier l'angle + A ou − A que les voiles solaires 50 et 51 font avec l'axe Z. Dans ce cas, il est souhaitable que les deux voiles solaires 50 et 51 soient équipées du même dispositif et commandées simultanément de façon à ce que leur orientation par rapport à l'axe Z reste symétrique. La conséquence est analogue à celle produite par le dispositif de la figure 4 : la valeur du couple dû à la pression solaire, ici autour de l'axe X, est modifiée.

Les modifications représentées figures 4 et 5 introduisent toutefois une complication de l'ensemble et sont moins fiables. C'est pourquoi, si le problème précis le permet, on préférera s'en tenir aux réalisations des figures 2 et 3.

Dans tous les cas, le dispositif qui fait l'objet de cette invention permet une économie et une sécurité accrues par rapport aux dispositifs antérieurs sans compliquer exagérément la sonde spatiale, car les roues cinétiques et les tuyères existent déjà forcément pour d'autres utilisations.

## Revendications

1. Dispositif de pointage d'une sonde spatiale vers un corps céleste par rotation de la sonde (S) autour d'un premier axe (Y) qui comprend un capteur (10) de position du corps céleste et un premier système moteur (11, 11') reliés à un premier système de commande (12), caractérisé en ce qu'il comprend en outre : une roue cinétique (20, 40) tournant autour d'un deuxième axe (X ou Z) orthogonal au premier axe (Y) ; une voilure solaire (30, 31, 50, 51) recevant du Soleil (So) une pression solaire qui engendre sur la sonde (S) une action résultante qui inclut un couple autour d'un troisième axe (Z ou X), orthogonal au premier (Y) et au deuxième axes (X ou Z) ; ainsi qu'un variateur de vitesse (23, 43) de la roue cinétique (20, 40) et un second système moteur (27, 27', 47, 47'), imprimant à la sonde (S) une rotation autour du deuxième axe (X ou Z), tous deux reliés un second système de commande (24, 44) qui connaît la valeur de la pression solaire (Ps) et la vitesse de rotation à imprimer à la sonde autour du premier axe (Y).

2. Dispositif de pointage d'une sonde spatiale selon la revendication 1, caractérisé en ce que le couple est produit par une dissymétrie de la voilure solaire (30, 31) par rapport au troisième axe (Z).

3. Dispositif de pointage d'une sonde spatiale selon la revendication 1, caractérisé en ce que le couple est produit par une orientation oblique de la voilure solaire (50, 51) par rapport au troisième axe (X).

4. Dispositif de pointage d'une sonde spatiale selon l'une quelconque des revendications précédentes, caractérisé en ce qu'il comprend un système mécanique (60, 62, 70, 71) déformant la voilure solaire de façon à modifier le couple s'exerçant sur la sonde (S) sans que la pression solaire varie.

5. Procédé de pointage d'une sonde spatiale vers un corps céleste par rotation autour d'un premier axe (Y) à l'aide d'un dispositif conforme à l'une quelconque des revendications précédentes, caractérisé en ce qu'il consiste, la sonde (S) étant préalablement pointée vers le corps céleste, à successivement :

— évaluer la vitesse de rotation à imprimer à la sonde (S) pour maintenir le pointage ;

— agir sur la vitesse de rotation de la roue cinétique (20, 40) par le variateur de vitesse (23, 43) tout en évitant une rotation de la sonde (S) autour du deuxième axe en actionnant le second système moteur (27, 27', 47, 47') ;

— interrompre toute action de correction pendant un temps déterminé ; et

— corriger périodiquement, comme connu en soi, le pointage de la sonde (S) en actionnant le premier système moteur (11, 11').

## Patentansprüche

1. Vorrichtung zur Lageausrichtung einer Raumsonde in Richtung eines Himmelskörpers durch Rotation der Sonde (S) um eine erste Achse (Y), die einen ersten Positionsaufnehmer (10) für den Himmelskörper und ein erstes Motorsystem (11, 11') umfaßt, die mit einem ersten Steuerungssystem (12) verbunden sind, dadurch gekennzeichnet, daß sie außerdem umfaßt : ein kinetisches Rad (20, 40), das sich um eine zweite Achse dreht (X oder Z), die zur ersten Achse (Y) senkrecht ist ; ein Sonnensegel (30, 31, 50, 51), das von der Sonne (So) eine Sonnendruck erhält, der eine auf die Sonde (S) resultierende Kraft erzeugt, die ein Drehmoment um eine dritte Achse (Z oder X), senkrecht zur ersten Achse (Y) und zur zweiten Achse (X oder Z) ein schließt ; ebenso wie einen Geschwindigkeitsregler (23, 43) für das kinetische Rad (20, 40) und ein zweites Motorsystem (27, 27', 47, 47'), das der Sonde (S) eine Drehung um die zweite Achse (X oder Z) aufprägt, wobei beide mit einem zweiten Steuerungssystem (24, 44) verbunden sind, das den Wert des Sonnendrucks (Ps) und die aufzuprägende Rotationsgeschwindigkeit um die erste Achse (Y) kennt.

2. Vorrichtung zur Lageausrichtung einer Raumsonde nach Anspruch 1, dadurch gekennzeichnet, daß das Drehmoment durch eine Dissymetrie des Sonnensegels (50, 51) bezüglich der dritten Achse (X) erzeugt wird.

3. Vorrichtung zur Lageausrichtung einer Raumsonde nach Anspruch 1, dadurch gekennzeichnet, daß das Drehmoment durch eine geneigte Ausrichtung des Sonnensegels (50, 51) bezüglich der dritten Achse (X) erzeugt wird.

4. Vorrichtung zur Lageausrichtung einer Raumsonde nach einem der vorhergehenden Ansprüche, dadurch gekennzeichnet, daß sie ein mechanisches System (60, 62, 70, 71) umfaßt, das das Sonnensegel derart verformt, daß sich das auf die Sonde (S) wirkende Drehmoment verändert, ohne daß sich der Sonnendruck verändert.

5. Verfahren zur Lageausrichtung einer Raumsonde in Richtung eines Himmelskörpers durch Rotation der Sonde (S) um eine erste Achse (Y) mittels einer Vorrichtung nach einem der vorhergehenden Ansprüche, dadurch gekennzeichnet, daß es, nachdem die Sonde (S) zuvor auf den Himmelskörper ausgerichtet wurde, darin besteht, der Reihe nach :

— die der Sonde (S) aufzuprägende Drehgeschwindigkeit zum Halten der Ausrichtung auszuwerten ;

— auf die Drehgeschwindigkeit des kinetischen Rads (20, 40) durch den Geschwindigkeitsregler (23, 43) zu wirken, wobei eine Rotation der Sonde (S) um eine zweite Achse durch Betätigung des zweiten Motorsystems (27, 27', 17, 47') vermieden wird ;

— jegliche Korrektur während eines vorgegebenen Zeitintervalls zu unterbrechen ; und

— periodisch, wie an sich bekannt, die Ausrichtung der Sonde (S) durch Betätigung des ersten Motorsystems (11, 11') zu korrigieren.

## Claims

1. Device for aiming a space probe toward a celestial body by rotating the probe (S) about a first axis (Y), said device comprising a sensor (10) for the position of the celestial body and a first motive system (11, 11'), both being connected to a first control system (12), characterized in that it comprises moreover a kinetic wheel (20, 40) which turns about a second axis (X or Z) orthogonal to the first axis (Y), a solar sail (30, 31, 50, 51) which receives solar pressure from the sun (So) and which causes a resultant effect on the probe (S) which includes a torque about a third axis (Z or X) orthogonal to the first and second axes (Z or X), as well as a variable-speed drive (23, 43) for the kinetic wheel (20, 40) and a second motive system (27, 27', 47, 47') which imparts a rotation to the probe (S) about the second axis (X or Z), both being connected to a second control system (24, 44) which knows the value of the solar pressure (Ps) and the rotational speed which is to be imparted to the probe about the first axis (Y).

2. Device for aiming a space probe according to claim 1, characterized in that the torque is produced by an asymmetry of the solar sail (30, 31) with respect to the third axis (Z).

3. Device for aiming a space probe according to claim 1, characterized in that the torque is generated by an oblique orientation of the solar sail (50, 51) with respect to the third axis (X).

4. Device for aiming a space probe according to any one of the preceding claims, characterized in that it comprises a mechanical system (60, 62, 70, 71) which deforms the solar sail in order to change the torque exerted on the probe (S) without varying the solar pressure.

5. Method for aiming a space probe at a celestial body by rotation about a first axis (Y) with the aid of a device according to any one of the preceding claims, characterized in that, with the probe (S) previously aimed at the celestial body, it comprises evaluating the rotational speed to be imparted to the probe (S) for maintaining the aim, acting on the rotational speed of the kinetic wheel (20, 40) by the variable-speed drive (23, 43), whilst preventing a rotation of the probe (S) about the second axis by actuating the second motor system (27, 27', 47, 47'), interrupting all corrective action for a given time and, as known per se, periodically correcting the aiming of the probe (S) by actuating the first motor system (11, 11').

FIG. 1

FIG. 2

7

FIG. 3

50

+A

44 47'

13 12

14'

10

14

11'

11

43

42

40

42 Z

46

X 42

46'

47

-A

51

FIG. 5

24

63

50

61

70

60

71

62

72

31

44

Y

B FIG. 4